Europäisches Patentamt

European Patent Office

Office européen des brevets

(11) Publication number: **0 277 135**
**B1**

(12) **EUROPEAN PATENT SPECIFICATION**

(45) Date of publication of the patent specification:
14.06.89

(51) Int. Cl.⁴: **F 15 B 13/06**

(21) Application number: **86906426.1**

(22) Date of filing: **17.10.86**

(86) International application number:
**PCT/IT 86/00074**

(87) International publication number:
**WO 87/02428 (23.04.87 Gazette 87/9)**

(54) **COMPRESSED AIR SELECTOR.**

(30) Priority: **17.10.85 IT 2343385 U**

(43) Date of publication of application:
**10.08.88 Bulletin 88/32**

(45) Publication of the grant of the patent:
**14.06.89 Bulletin 89/24**

(84) Designated Contracting States:
**AT BE DE FR GB IT NL SE**

(56) References cited:
**US-A- 2 165 096**
**US-A- 2 821 998**
**US-A- 2 881 802**

**The Engineer, Volume 228, No. 5911, 8 May 1969,**
**Morgan-Grampian Ltd, (London G.B.), H.R.F. Arnstein,**
**"Selector valve makes pneumatic circuits simple",**
**pages 42-45**

(73) Proprietor: **FINBIOMEDICA S.r.l., Via Mestre, 19/D,,**
**I-20132 Milan (IT)**

(72) Inventor: **CHINELLO, Palmiro, Via Zanella, 21,**
**I-20033 Desio (IT)**

(74) Representative: **Dr. Ing. A. Racheli & C., Viale San**
**Michele del Carso, 4, I-20144 Milano (IT)**

## Description

The present invention refers to a compressed air selector which can be used when air must be fed to a plurality of users, for instance to a series of receptacles containing liquids which have to be subsequently channelled to tanks which have to be filled.

The solutions usually provided foresee a set of electrovalves, one for each use, which complicate the circuit making it also very expensive.

The old patent US-A-2.165.096 foresees a compressed air multiway valve made up of a circular crown, having a plurality of peripheral holes, and a rotor, which rotates around the crown's axis, said rotor having an air connection positioned at its axis of rotation, the air connection leading to a radial enlarged bore where a head is received and pushed by a spring against the crown. The air tightness of this selector can cause problems due to the fact that it can be achieved only by means of the spring force. No use is made of the air pressure, as the head freely slides in the enlarged hole. For this reason the multiway valve according to this patent is usually provided with covers fixed to the stator by means of screws. Moreover, a solid rotor is provided. This causes a lot of friction.

US-A-2.821.998 describes a mixer in which the flow of more inputs can be connected to a single output. The axial port is only used for sampling. However, here a tube is used as a rotor for connecting the crown to the rest of the valve. This tube ends with a fixed head which must tightly fit in the crown, no adjusting possibility being provided.

The aim of the present invention is to carry out a compressed air selector which allows the feeding of air in succession to a great number of users with a minimal cost and the highest efficiency. Said aim has been achieved as specified in the appended claims.

The invention will be now better illustrated by means of an exemplary embodiment shown in the enclosed drawings, wherein:

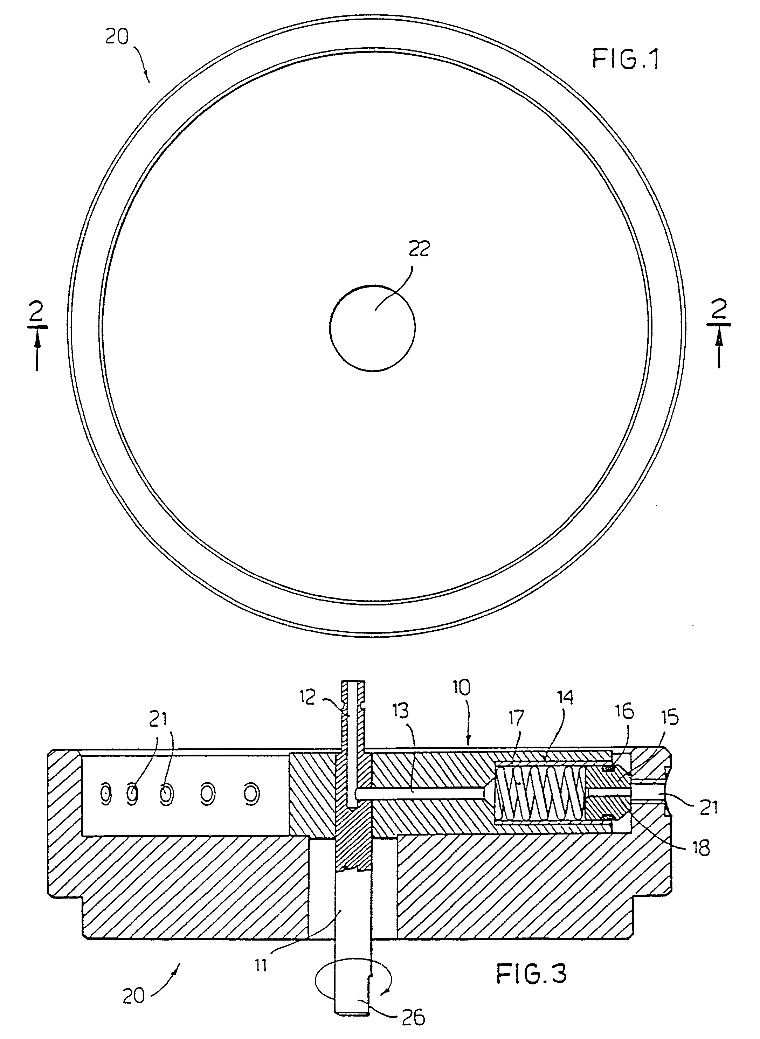

Fig. 1 is a top view of the proposed selector;

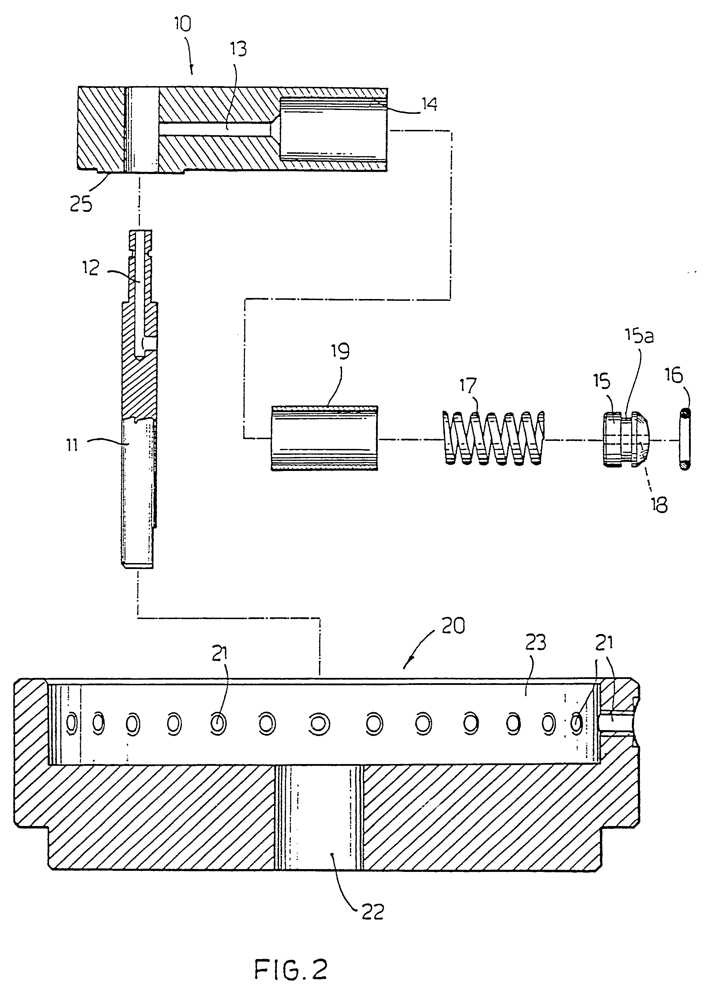

Fig. 2 is an exploded view taken along line 2-2 of Fig. 1; and
Fig. 3 is a view similar to that of Fig. 2, but with all the pieces assembled.

With reference to the drawings it will be noted that the proposed selector is made up of a circular crown, shown in its whole by 20, and by a tube 10. The circular crown is peripherally provided with holes 21 which are spaced from one another at a distance equal to four or five times the diameter of the axial hole 18.

The crown 20 is provided with a central hole 22. A shaft 11 axially perforated at 12 is made integral to the tube 10 which rotates concentrically to the crown, said tube 10 being provided with a jut-shaped centering means 25 which is received inside hole 22. The tube 10 will then be able to rotate within the crown 20 each time the shaft 11 is rotated, for instance by a stepped motor which acts on the end 26 of the shaft 11.

The axial hole 12 continues perpendicularly to the shaft axis in such a way that the air which passes through hole 12 can then pass through tube 10 and in particular through an axial hole 13. The tube 10 is closed axially, so that only the air coming from hole 12 can enter.

The hole 13 becomes broader at its free end forming a wider hole 14 apt to receive the head 15 provided with a seat 15a for a gasket 16 and an axial hole 18. The head is pushed against the crown internal wall 23 by a spring 17. Between the hole 14 and the head 15, a bushing 19 can be provided.

The selector works as follows: the compressed air supplied into hole 12 reaches hole 13 of tube 10, passes through the axial hole 18 of head 15 and arrives then to one of the crown holes 21 if head 15 is positioned in correspondence to it. The selector can instead function as a closing element, in the case the tube 10 and the corresponding head 15 is positioned between a hole 21 and another.

## Claims

1. A compressed air selector made up of a circular crown (20), having a plurality of peripherical holes (21), and a rotor (10), which rotates around the crown's axis, said rotor (10) having an air connection (12) positioned at its axis of rotation, the air connection (12) leading to a radial enlarged bore (14) where a head (15) is received and pushed by a spring (17) against the crown (20), *characterized in that* the rotor is a tube (10) fast with a shaft (11) provided with the air connection (12), that the tube (10) is provided with centering means (25) engaging a central hole (22) in the crown (20), and that the head (15) slides in a bushing (19) provided in the bore (14) where it (15) is received in an airtight way by means of a gasket (16), the head (15) being biased against said crown (20) by the spring (17) and also by the air pressure itself.

2. A selector according to claim 1, characterized in that the radius of the head (15) is equal or slightly less for a few tenths of millimeter than the internal radius of the crown (20).

## Patentansprüche

1. Druckluftwahlschalter bestehend aus einem runden Kranz (20) mit mehreren periphärischen Löchern (21) und einem Rotor (10), der um die Achse des Kranzes läuft, wobei der Rotor (10) eine Luftzuleitung (12) aufweist, die in Übereinstimmung ihrer Rotationsachse angeordnet ist und die Luftzuleitung (12) zu einem erweiterten radialen Loch (14) führt, wo ein Kopf (15) aufgenommen ist und von einer Feder (17) gegen den Kranz (20) gedrückt wird,
*dadurch gekennzeichnet*, dass der Rotor ein mit einer Welle (11) verbundenes Rohr (10) ist, in dem die Luftzuleitung (12) vorgesehen ist, dass das Rohr (10) mit Zentriermitteln (25) ausgestattet ist, die in ein zentrales Loch (22) im Kranz (20) eingreifen, und dass der Kopf (15) in einer Buchse (19) gleitet, die ein Loch (14) aufweist, in dem der Kopf (15) mit Hilfe der Dichtung (16) luftdicht aufgenommen wird, wobei der Kopf (15) von der Feder (17) und von Luftdruck gegen den Kranz (20) gedrückt wird.

2. Druckluftwahlschalter nach Anspruch 1, dadurch gekennzeichnet, dass die Krümmung des Kopfes (15) gleich oder um einige Zehntelmillimeter geringer als die innere Krümmung des Kranzes (20) ist.

## Revendications

1. Sélecteur d'air comprimé se composant d'une couronne circulaire (20), ayant plusieurs trous périphériques (21), et d'un rotor (10) tournant autour de l'axe de la couronne, ledit rotor (10) ayant un branchement pour l'air (12) disposé en correspondance de son axe de rotation, le branchement pour l'air (12) conduisant à un trou radial élargi (14) où une tête (15) est reçue et poussée par un ressort (17) contre la couronne (20), caractérisé en ce que le rotor est un tube (10) relié à un arbre (11) où est prévu le branchement pour l'air (12); en ce que le tube (10) est muni de moyens de centrage (25) engageant un trou central (22) dans la couronne (20) et que la tête (15) est coulissante dans un fourreau (19) prévu dans le trou (14) où la tête (15) est reçue à tenue d'air à l'aide d'un joint (16), la tête (15) étant poussée contre ladite couronne (20) par le ressort (17) et par la pression même de l'air.

2. Sélecteur d'air comprimé selon la revendication 1, caractérisé en ce que le rayon de cintrage de la tête (15) est identique ou légèrement inférieur de quelques dixièmes de millimètre au rayon de cintrage intérieur de la couronne (20).

20

FIG.1

22

2      2

12   10   17   14   16   15

21   13

21

18

11

20

FIG.3

26

FIG.2